# EUROPEAN PATENT SPECIFICATION

(11) **EP 3 336 588 B1**
(45) Date of publication and mention of the grant of the patent: **06.09.2023**
(21) Application number: 17205252.4
(22) Date of filing: 04.12.2017
(51) Int. Cl.: G06V 10/46, G06V 10/75, G06V 20/52, G01V 5/00

(54) **METHOD AND APPARATUS FOR MATCHING IMAGES**
VERFAHREN UND VORRICHTUNG ZUM ABGLEICHEN VON BILDERN
PROCÉDÉ ET APPAREIL DE MISE EN CORRESPONDANCE D'IMAGES

(30) Priority: 16.12.2016 CN 201611175250
(43) Date of publication of application: 20.06.2018
(73) Proprietor: Nuctech Company Limited, TongFang Building, Shuangqinglu, Haidian District Beijing 100084 (CN)
(72) Inventor: WU, Fan, Haidian District, Beijing 100084 (CN); TIAN, Long, Haidian District, Beijing 100084 (CN); WANG, Tao, Haidian District, Beijing 100084 (CN)
(74) Representative: Boult Wade Tennant LLP

(56) References cited:
- US-A1- 2005 238 232
- THOMAS A D H ET AL: "Real-time Industrial Visual Inspection: A Review", REAL-TIME IMAG, ACADEMIC PRESS LIMITED, GB, vol. 1, no. 2, 1 June 1995 (1995-06-01), pages 139-158, XP004419709, ISSN: 1077-2014, DOI: 10.1006/RTIM.1995.1014
- Ding Yuhua: "AN INTEGRATED APPROACH TO REAL-TIME MULTISENSORY INSPECTION WITH AN APPLICATION TO FOOD PROCESSING", Ph.D. dissertation presented to the School of Electrical and Computer Engineering, Georgia Institute of Technology, 1 December 2003 (2003-12-01), December 2003 (2003-12), pages 1-89, XP055911560, Retrieved from the Internet: URL:https://smartech.gatech.edu/bitstream/ handle/1853/5293/ding_yuhua__200312.pdf [retrieved on 2022-04-11]

## Description

### TECHNICAL FIELD

The present disclosure generally relates to security inspection, and more particularly, to a method and apparatus for matching images.

### BACKGROUND

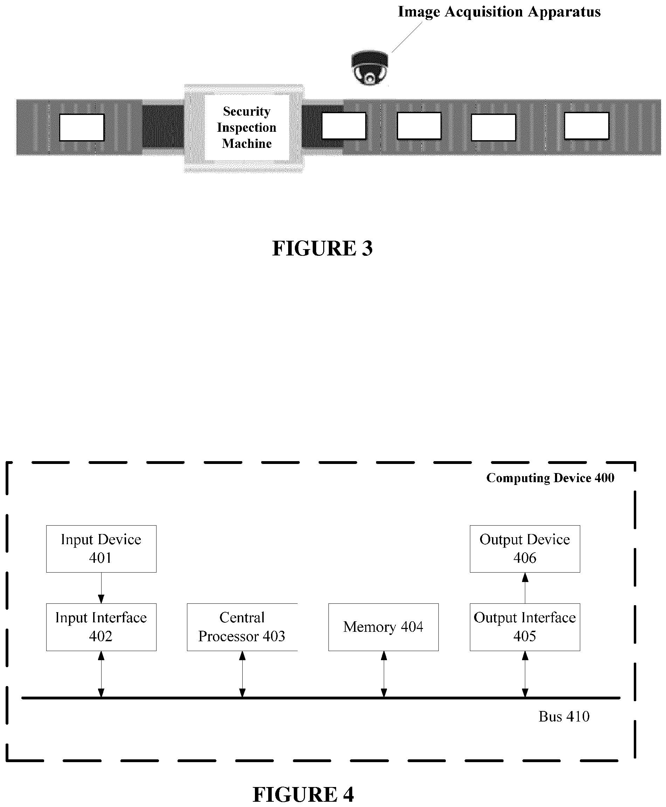

In application scenarios of security inspection such as subway stations and airports and so on, it is usual to acquire X-ray images of a series of articles by security inspection equipment, for example, an X-ray machine, and appearance images of these articles by an image acquisition apparatus, for example, a camera which is installed near the security inspection equipment. Figure 3 illustrates a diagram of an example security inspection scenario in which the security inspection equipment and the image acquisition apparatus are installed. In the security inspection scenario illustrated in figure 3, as a relative position between the security inspection equipment and the image acquisition apparatus is fixed, the difference between generation times of the X-ray image and the appearance image of a same article is substantially fixed if both the security inspection equipment and the image acquisition apparatus are in normal operation. For a specific article, the matching between the X-ray image and the appearance image of the article may be accomplished based on the generation time of the X-ray image and the difference between the generation times of the X-ray image and the appearance image of the article.

As the security inspection equipment and the image acquisition apparatus which is installed near the security inspection equipment often cannot generate the X-ray image and the appearance image of the same article at the same time, for example, in the security inspection scenario illustrated in figure 3, the article will reach an image acquisition range of the image acquisition apparatus after it passes through the security inspection equipment for a period of time, the following situations might occur: as a conveyor belt of the security inspection equipment stops or rewinds or the article is blocked by a lead curtain at an outlet of the security inspection equipment, the time when the article reaches the image acquisition range of the image acquisition apparatus becomes uncertain, so that the matching effect of the X-ray image and the appearance image of the article is poor, for example, the X-ray image of the article cannot be matched with the appearance image of the article or the X-ray image of the article is matched with the appearance image of another article.

US-A-2005/238232 discloses a method of and system for detecting threat objects represented in 3D CT data using knowledge of one or more predefined shapes of the threat objects. An object represented by CT data for a region is identified. A two-dimensional projection of the object along a principal axis of the object is generated. A contour of the object boundary in the projection image is computed. A shape histogram is computed from the extracted contour. A difference measure between the extracted shape histogram and a set of pre-computed threat shape histograms is computed. A declaration of a threat object is made if the difference measure is less than a pre-defined threshold.

Real-time Industrial Visual Inspection: A Review, by A.D.H.Thomas et al, REAL-TIME IMAG, ACADEMIC PRESS LIMITED, GB, (19950601), vol. 1, no. 2, pages 139 - 158, provides a review of state-of-the-art techniques and technologies associated with real-time automated visual inspection as applied in industrial situations. A survey of the most widely used machine vision algorithms is presented, with emphasis on those algorithms most suited to real-time application. Practical illumination schemes for real-time industrial inspection are also considered. The paper then considers system robustness and verification, including temporal verification.

"An integrated approach to real-time multisensory inspection with an application to food processing" by Yuhua Ding (dissertation presented to the Schol of Electrical and Computer Engineering, Georgia Institute of Technology, December 2003) provides a methodology of detection of defects and foreign objects in food processing, and an algorithm for segmentation of vector-valued images.

### SUMMARY

In view of one or more of the above defects, the disclosure provides a novel method and apparatus for matching images.

According to a first aspect of the present invention, there is provided a method for matching images according to claim 1.

An apparatus for matching images in accordance with a second aspect of the present invention is defined in claim 5.

An apparatus comprising a memory storing computer executable instructions and a processor which, when executing the computer executable instructions, carries out the method steps of claim 1, is defined by claim 9.

The method and apparatus for matching images according to embodiments of the disclosure may improve the accuracy of matching images and thus improve security inspection efficiency.

### BRIEF DESCRIPTION OF THE DRAWINGS

Other features, purposes and advantages of the disclosure will become apparent by reading detailed description of non-restrictive embodiments of the disclosure in conjunction with the accompanying drawings, wherein a same or similar reference number refers to a same or similar feature.
Figure 1 illustrates a block diagram of an apparatus for matching images according to the disclosure.
Figure 2 illustrates a flowchart of a method for matching images according to the disclosure.
Figure 3 illustrates a diagram of an example security inspection scenario in which security inspection equipment and an image acquisition apparatus are installed.
Figure 4 illustrates a structure diagram of exemplary hardware architecture of a computing device in which the method and apparatus for matching images according to the disclosure may be implemented

### DETAILED DESCRIPTION

Example implementations will now be comprehensively described in conjunction with the accompanying drawings.

In the figures, some areas and layers are exaggerated for clarity. A same reference number in the figure refers to a similar or same structure, so their detailed description will be omitted.

In a security inspection scenario illustrated in figure 3, it is usual to find out an appearance image matching with an X-ray image of a certain article, i.e., the appearance image of the article by the following method for matching images. Specifically, the method for matching images includes: determining a difference between generation times of the X-ray image and the appearance image of a same article in a specific security inspection scenario in advance; for a specific X-ray image, calculating the generation time of the appearance image matching with the X-ray image based on the generation time of the X-ray image and the difference and thus finding out the appearance image matching with the X-ray image, i.e., the appearance image of the article for which the X-ray image is generated.

In the security inspection scenario illustrated in figure 3, the generation time of the appearance image of the article is a sum of the generation time of the X-ray image of the article and the difference. Those skilled in the art should appreciate that although figure 3 illustrates the security inspection scenario in which the article enters the security inspection equipment firstly and then enters an image acquisition range of an image acquisition apparatus, the above method for matching images is also applicable to a security inspection scenario in which the article enters the image acquisition range of the image acquisition apparatus firstly and then enters the security inspection equipment, and the generation time of the appearance image of the article becomes to a difference of the generation time of the X-ray image of the article minus the difference.

In the case that both the security inspection equipment and the image acquisition apparatus are in normal operation, the X-ray image and the appearance image of the same article may be simply determined by the above method for matching images. However, in the case that a conveyor belt of the security inspection equipment stops or rewinds or the article is blocked by a lead curtain at an inlet/outlet of the security inspection equipment, the X-ray image and the appearance image of the same article cannot be accurately matched with each other.

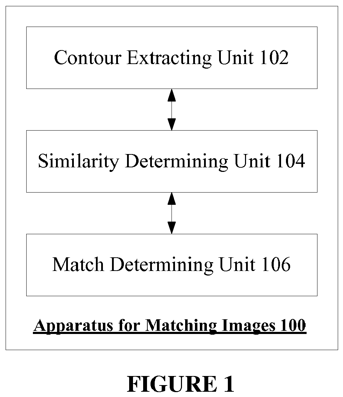

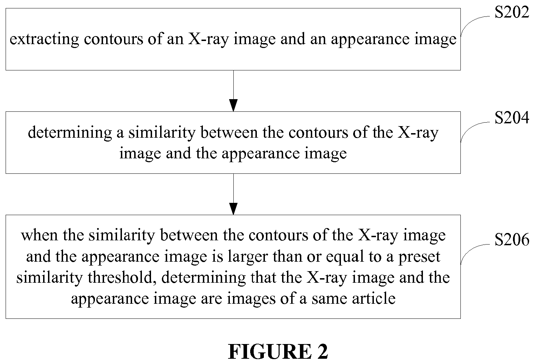

Therefore, the disclosure provides a novel method for matching images to improve the accuracy of matching images, i.e., ensure that the X-ray images may be matched with correct appearance images. Figure 1 illustrates a block diagram of an apparatus for matching images according to an embodiment of the disclosure. Figure 2 illustrates a flowchart of a method for matching images according to an embodiment of the disclosure. The apparatus and method for matching images according to embodiments of the disclosure will be described in detail below in conjunction with figures 1-2.

As illustrated in figure 1, the apparatus for matching images 100 according to an embodiment of the disclosure includes a contour extracting unit 102, a similarity determining unit 104 and a match determining unit 106, wherein: the contour extracting unit 102 is configured to extract contours of an X-ray image and an appearance image, i.e., implement step S202; the similarity determining unit 104 is configured to determine a similarity between the contours of the X-ray image and the appearance image, i.e., implement step S204; and the match determining unit 106 is configured to, when the similarity between the contours of the X-ray image and the appearance image is larger than or equal to a preset similarity threshold, determine that the X-ray image and the appearance image are images of a same article, i.e., implement step S206.

Not encompassed by the wording of the claims, the match determining unit 106 may be further configured to, when the similarity between the contoures of the X-ray image and the appearance image is less than the preset similarity threshold, determine that the X-ray image and the appearance image are not images of the same article. The apparatus and method for matching images according to embodiments of the disclosure may avoid matching errors induced by for example, the conveyor belt of the security inspection equipment stopping or rewinding or the article being blocked by the lead curtain at the inlet/outlet of the security inspection equipment, improve the accuracy of matching images and thus improve security inspection efficiency.

Not encompassed by the wording of the claims, the apparatus for matching images 100 according to an embodiment of the disclosure may further include an image selecting unit (not shown) configured to select any of one or more appearance images, the generation times of which are later or earlier than the generation time of the X-ray image for a preset period of time, to match with the X-ray image. Here, as long as the preset peirod of time is long enough, the matching errors induced by , the conveyor belt of the security inspection equipment stopping or rewinding or the article being blocked by the lead curtain at the inlet/outlet of the security inspection equipment may be avoided. That is, it may be ensured that all X-ray images may be matched with corresponding appearance images, so the success rate of matching images may be improved. Of course, in order to garantee the efficiency of matching images, the length of hte preset period of time may be set to a proper value according to experiences.

The contour extracting unit 102 may acquire the contours of the X-ray image and the appearance image by the following processing: converting the X-ray image and the appearance image into gray images; and binarizing the gray images of the X-ray image and the appearance image to extract the contours of the X-ray image and the appearance image. By converting the X-ray image and the appearance image into the gray images, rough contours including noises such as textures in the gray images of the X-ray image and the appearance image may be acquired. By binarizing the gray images of the X-ray image and the appearance image, inteferences of various textures in the gray images to extracting the contours may be effectively reduced. If the gray images of the X-ray image and the appearance image are not binarized, the textures in the gray images will be identified as part of the contours, leading to that the number of contour lines are excessive and thus degrading the accurary and efficiency of matching images.

Here, a binarizing threshold for binarizing gray values of the X-ray image and the appearance image may be obtained by experiments and may be adjusted based on actual requirements. In the embodiment, the binarizing threshold for binarizing the gray images of the X-ray image and/or the appearance image may be any of gray values ranging from 15 to 35. For any pixel in the gray image of the X-ray image/the appearance image, if the gray value of the pixel is less than the binarizing threhsold, then it is considered that the pixel corresponds to background, or else it is considered that the pixle corresponds to the article.

Those skilled in the art should appreciate that the method for extracting the contours of the X-ray image and the appearance image is not limited to the above method, and the contour extracting unit 102 may also extract the contours of the X-ray image and the appearance image by other methods well known to those skilled in the art.

In actual security inspection scenarios, as the X-ray image and the appearance image are generated respectively by the security inspection equipment and the image acquisition apparatus and the relative positions of the security inspection equipment and the image acquisition apparatus with respect to the article are not exactly the same, the X-ray image and the appearance image of the same article often contains differences in terms of size and perspective. Therefore, when matching the X-ray image with the appearance image, it should focus on the contours of the articles in the images, ignoring interference factors such as scaling and rotation and so on.

The similarity determining unit 104 may determine the similarity between the contours of the X-ray image and the appearance image by the following processing: determining geometry-invariant moments (Hu invariant moments) of the contours of the X-ray image and the appearance image; and determining a measure of difference between the geometry-invariant moments of the contours of the X-ray image and the appearance image, as the similarity betwenn the contours of the X-ray image and the appearance image.

Those skilled in the art should appreciate that the method for determining the similarity between the contours of the X-ray image and the appearance image is not limited to the above method, and the similarity determining unit 104 may also determine the similarity between the contours of the X-ray image and the appearance image by other methods well known to those skilled in the art. For example, the similarity determining unit 104 may determine a difference of other characteristic values of the contours of the X-ray image and the appearance image as the similarity between the contours thereof, as long as the characteristic values can accurately reflect relative-position relations between respective parts of the contours.

Here, the preset similarity threshold for determining whether the X-ray image and the appearance image are images of the same article may be obtained by experiments and may be adjusted based on actual requirements. In the case that the difference between the geometry-invariant moments of the contours of the X-ray image and the appearance image is taken as the similarity thereof, the preset similarity threshold may be set to 0.3. Here, the less the difference between the geometry-invariant moments of two contours are, the two contour are more similar, and the possibility that the two contour correspond to the same article is larger.

Figure 4 illustrates a structure diagram of exemplary hardware architecture of a computing device in which the method and apparatus for matching images according to embodiments of the disclosure may be implemented. As illustrated by figure 4, the computing device 400 includes an input device 401, an input interface 402, a central processor 403, a memory 404, an output interface 405, and an output device 406, wherein: the input interface 402, the central processor 403, the memory 404, and the output interface 405 are connected with each other via a bus 410; the input device 401 and the output device 406 are connected with the bus 410 via the input interface 402 and the output interface 405 respectively, and thus are connected with other components of the computing device 400. In particular, the input device 401 receives the X-ray image and the appearance image from the security inspection equipment and the image acquisition apparatus respectively, and transmits the X-ray image and the appearance image to the central processor 403 via the input interface 402; the central processor 403 matches the X-ray image with the appearance image based on computer executable instructions stored in the memory 404 to determine output information indicating whether the X-ray image and the appearance image are images of the same article, temporarily or permanently stores the output information in the memory 404, and then transmits the output information to the output device 406 via the output interface 405; the output device 406 outputs the output information to the external of the computing device 400 for the use by the user.

That is, the apparatus for matching images 100 illustrated by figure 1 may be implemented as including: a memory storing computer executable instructions; and a processor, when executing the computer executable instructions, operable to implement the method and apparatus for matching images described in connection with figures 1 and 2. Here, the processor may execute the computer executable instructions, for example based on the X-ray image and the appearance image from the security inspection equipment and the image acquisition apparatus, so as to implement the method and apparatus for matching images described in connection with figures 1 and 2.

The function blocks illustrated in the aforementioned structure block diagram may be implemented as hardware, software, firmware, or a combination thereof. When the function blocks are implemented in hardware, they may be, for example, electronic circuits, application specific integrated circuits (ASIC), appropriate firmware, plug-ins, functional cards and so on. When the function blocks are implemented in software, the elements of the present disclosure are programs or code segments for performing the required tasks. The programs or code segments may be stored in machine readable media, or may be transmitted over transmission media or communication links via data signals carried in carrier waves. The "machine readable media" may include any media that are able to store or transmit information. The machine readable media may include, for example, electronic circuits, semiconductor memory devices, ROM, flash memories, erasable ROM (EROM), floppy disks, CD-ROM, optical disks, hard disks, optical fiber media, radio frequency (RF) links, and so on. The code segments may be downloaded via a computer network such as Internet, intranet.

## Claims

1. A method for matching images, comprising:
passing one or more articles through a security inspection equipment for a period of time, and, after that, reaching through an image acquisition range of an image acquisition apparatus installed near the security inspection equipment, or, alternatively, passing one or more articles through the image acquisition range of the image acquisition apparatus installed near the security inspection equipment firstly and then entering the security inspection equipment for a period of time;
extracting a contour of an X-ray image and a contour of an appearance image, wherein the X-ray image is generated by the security inspection equipment, and the appearance image is generated by the image acquisition apparatus (S202);
determining a similarity between the contours of the X-ray image and the appearance image (S204); and
when the similarity between the contours of the X-ray image and the appearance image is larger than or equal to a preset similarity threshold, determining that the X-ray image and the appearance image are images of a same article (S206).

2. The method of claim 1, wherein when the similarity between the contours of the X-ray image and the appearance image is less than the preset similarity threshold, it is determined that the X-ray image and the appearance image are not images of the same article.

3. The method of claim 1, wherein the processing of extracting the contours of the X-ray image and the appearance image comprises:
converting the X-ray image and the appearance image into gray images; and
binarizing the gray images of the X-ray image and the appearance image to extract the contours of the X-ray image and the appearance image.

4. The method of claim 1, wherein the processing of determining the similarity between the contours of the X-ray image and the appearance image comprises:
determining geometry-invariant moments of the contours of the X-ray image and the appearance image; and
determining a measure of difference between the geometry-invariant moments of the contours of the X-ray image and the appearance image, as the similarity between the contours of the X-ray image and the appearance image.

5. An apparatus for matching images, comprising:
a contour extracting unit (102) configured to extract a contour of an X-ray image and a contour of an appearance image, wherein the X-ray image is generated by a security inspection equipment, and the appearance image is generated by an image acquisition apparatus installed near the security inspection equipment, and wherein one or more articles are passed through the security inspection equipment for a period of time, and, after that, reaching through an image acquisition range of the image acquisition apparatus, or, alternatively, one or more articles are passed through the image acquisition range of the image acquisition apparatus firstly and then entered in the security inspection equipment for a period of time;
a similarity determining unit (104) configured to determine a similarity between the contours of the X-ray image and the appearance image; and
a match determining unit (106) configured to, when the similarity between the contours of the X-ray image and the appearance image is larger than or equal to a preset similarity threshold, determine that the X-ray image and the appearance image are images of a same article.

6. The apparatus of claim 5, wherein the match determining unit is further configured to, when the similarity between the contours of the X-ray image and the appearance image is less than the preset similarity threshold, determine that the X-ray image and the appearance image are not images of the same article.

7. The apparatus of claim 5, wherein the contour extracting unit is further configured to:
convert the X-ray image and the appearance image into gray images; and
binarize the gray images of the X-ray image and the appearance image to extract the contours of the X-ray image and the appearance image.

8. The apparatus of claim 5, wherein the similarity determining unit is further configured to:
determine geometry-invariant moments of the contours of the X-ray image and the appearance image; and
determine a measure of difference between the geometry-invariant moments of the contours of the X-ray image and the appearance image, as the similarity between the contours of the X-ray image and the appearance image.

9. An apparatus for matching images, comprising:
a memory storing computer executable instructions;
a processor, when executing the computer executable instructions, operable to carry out the steps of the method claim 1.

## Patentansprüche

1. Verfahren zum Abgleichen von Bildern, umfassend:
Durchleiten von einem oder mehreren Gegenständen durch eine Sicherheitsinspektionseinrichtung für eine Zeitspanne und danach Durchlaufen eines Bilderfassungsbereichs einer in der Nähe der Sicherheitsinspektionseinrichtung installierten Bilderfassungsvorrichtung, oder alternativ Durchleiten von einem oder mehreren Gegenständen zunächst durch den Bilderfassungsbereich der in der Nähe der Sicherheitsinspektionseinrichtung installierten Bilderfassungsvorrichtung und dann Eintreten in die Sicherheitsinspektionseinrichtung für eine Zeitspanne;
Extrahieren einer Kontur eines Röntgenbildes und einer Kontur eines Erscheinungsbildes, wobei das Röntgenbild durch die Sicherheitsinspektionseinrichtung erzeugt wird und das Erscheinungsbild durch die Bilderfassungsvorrichtung (S202) erzeugt wird;
Bestimmen einer Ähnlichkeit zwischen den Konturen des Röntgenbildes und des Erscheinungsbildes (S204); und
wenn die Ähnlichkeit zwischen den Konturen des Röntgenbildes und des Erscheinungsbildes größer als oder gleich einem voreingestellten Ähnlichkeitsschwellenwert ist, Bestimmen, dass das Röntgenbild und das Erscheinungsbild Bilder desselben Gegenstandes sind (S206).

2. Verfahren nach Anspruch 1, bei dem, wenn die Ähnlichkeit zwischen den Konturen des Röntgenbildes und des Erscheinungsbildes kleiner als der voreingestellte Ähnlichkeitsschwellenwert ist, bestimmt wird, dass das Röntgenbild und das Erscheinungsbild keine Bilder desselben Gegenstandes sind.

3. Verfahren nach Anspruch 1, bei dem die Verarbeitung des Extrahierens der Konturen des Röntgenbildes und des Erscheinungsbildes umfasst:
Umwandeln des Röntgenbildes und des Erscheinungsbildes in Graustufenbilder; und
Binarisieren der Graustufenbilder des Röntgenbildes und des Erscheinungsbildes, um die Konturen des Röntgenbildes und des Erscheinungsbildes zu extrahieren.

4. Verfahren nach Anspruch 1, bei dem die Verarbeitung des Bestimmens der Ähnlichkeit zwischen den Konturen des Röntgenbildes und des Erscheinungsbildes umfasst:
Bestimmen geometrieinvarianter Momente der Konturen des Röntgenbildes und des Erscheinungsbildes; und
Bestimmen eines Maßes der Abweichung zwischen den geometrieinvarianten Momenten der Konturen des Röntgenbildes und des Erscheinungsbildes als die Ähnlichkeit zwischen den Konturen des Röntgenbildes und des Erscheinungsbildes.

5. Vorrichtung zum Abgleichen von Bildern, umfassend:
eine Konturextraktionseinheit (102), die konfiguriert ist, um eine Kontur eines Röntgenbildes und eine Kontur eines Erscheinungsbildes zu extrahieren, wobei das Röntgenbild von einer Sicherheitsinspektionseinrichtung erzeugt wird und das Erscheinungsbild von einer Bilderfassungsvorrichtung erzeugt wird, die in der Nähe der Sicherheitsinspektionseinrichtung installiert ist, und wobei ein oder mehrere Gegenstände für eine Zeitspanne durch die Sicherheitskontrolleinrichtung geleitet werden und danach einen Bilderfassungsbereich der Bilderfassungsvorrichtung durchlaufen, oder alternativ ein oder mehrere Gegenstände zunächst durch den Bilderfassungsbereich der Bilderfassungsvorrichtung geleitet werden und dann für eine Zeitspanne in die Sicherheitskontrolleinrichtung eingeführt werden;
eine Ähnlichkeitsbestimmungseinheit (104), die konfiguriert ist, um eine Ähnlichkeit zwischen den Konturen des Röntgenbildes und des Erscheinungsbildes zu bestimmen; und
eine Übereinstimmungsbestimmungseinheit (106), die konfiguriert ist, um, wenn die Ähnlichkeit zwischen den Konturen des Röntgenbildes und des Erscheinungsbildes größer als oder gleich einem voreingestellten Ähnlichkeitsschwellenwert ist, zu bestimmen, dass das Röntgenbild und das Erscheinungsbild Bilder desselben Gegenstandes sind.

6. Vorrichtung nach Anspruch 5, bei der die Übereinstimmungsbestimmungseinheit ferner konfiguriert ist, um zu bestimmen, dass das Röntgenbild und das Erscheinungsbild keine Bilder desselben Gegenstandes sind, wenn die Ähnlichkeit zwischen den Konturen des Röntgenbildes und des Erscheinungsbildes kleiner als der voreingestellte Ähnlichkeitsschwellenwert ist.

7. Vorrichtung nach Anspruch 5, bei der die Konturextraktionseinheit ferner konfiguriert ist zum:
Umwandeln des Röntgenbildes und des Erscheinungsbildes in Graustufenbilder; und
Binarisieren der Graustufenbilder des Röntgenbildes und des Erscheinungsbildes, um die Konturen des Röntgenbildes und des Erscheinungsbildes zu extrahieren.

8. Vorrichtung nach Anspruch 5, bei der die Ähnlichkeitsbestimmungseinheit ferner konfiguriert ist zum:
Bestimmen geometrieinvarianter Momente der Konturen des Röntgenbildes und des Erscheinungsbildes; und
Bestimmen eines Maßes der Abweichung zwischen den geometrieinvarianten Momenten der Konturen des Röntgenbildes und des Erscheinungsbildes als die Ähnlichkeit zwischen den Konturen des Röntgenbildes und des Erscheinungsbildes.

9. Vorrichtung zum Abgleichen von Bildern, umfassend:
einen Speicher, der computerausführbare Anweisungen speichert;
einen Prozessor, der, wenn er die computerausführbaren Anweisungen ausführt, betreibbar ist, um die Schritte des Verfahrens nach Anspruch 1 auszuführen.

## Revendications

1. Procédé d'appariement d'images, comprenant les étapes consistant à :
faire passer un ou plusieurs articles à travers un équipement d'inspection de sécurité pendant une période de temps, et, ensuite, atteindre une plage d'acquisition d'images d'un appareil d'acquisition d'images installé à proximité de l'équipement d'inspection de sécurité, ou, alternativement, faire passer d'abord un ou plusieurs articles à travers la plage d'acquisition d'images de l'appareil d'acquisition d'images installé à proximité de l'équipement d'inspection de sécurité, puis les faire entrer dans l'équipement d'inspection de sécurité pendant une période de temps ;
extraire un contour d'une image radiographique et un contour d'une image d'apparence, où l'image radiographique est générée par l'équipement d'inspection de sécurité, et l'image d'apparence est générée par l'appareil d'acquisition d'images (S202) ;
déterminer une similarité entre les contours de l'image radiographique et de l'image d'apparence (S204) ; et
lorsque la similarité entre les contours de l'image radiographique et de l'image d'apparence est supérieure ou égale à un seuil de similarité prédéfini, déterminer que l'image radiographique et l'image d'apparence sont des images d'un même article (S206) .

2. Procédé de la revendication 1, dans lequel lorsque la similarité entre les contours de l'image radiographique et de de l'image d'apparence est inférieure au seuil de similarité prédéfini, il est déterminé que l'image radiographique et l'image d'apparence ne sont pas des images du même article.

3. Procédé de la revendication 1, dans lequel le traitement d'extraction des contours de l'image radiographique et de l'image d'apparence comprend :
la conversion de l'image radiographique et de l'image d'apparence en image à niveaux de gris ; et
la binarisation des image à niveaux de gris de l'image radiographique et de l'image d'apparence pour extraire les contours de l'image radiographique et de l'image d'apparence.

4. Procédé de la revendication 1, dans lequel le traitement de détermination de la similarité entre les contours de l'image radiographique et de l'image d'apparence comprend :
la détermination de moments invariants en géométrie des contours de l'image radiographique et de l'image d'apparence ; et
la détermination d'une mesure de différence entre les moments invariants en géométrie des contours de l'image radiographique et de l'image d'apparence, comme étant la similarité entre les contours de l'image radiographique et de l'image d'apparence.

5. Appareil d'appariement d'images, comprenant :
une unité d'extraction de contours (102) configurée pour extraire un contour d'une image radiographique et un contour d'une image d'apparence, où l'image radiographique est générée par un équipement d'inspection de sécurité, et l'image d'apparence est générée par un appareil d'acquisition d'images installé à proximité de l'équipement d'inspection de sécurité, et où un ou plusieurs articles passent à travers l'équipement d'inspection de sécurité pendant une période de temps, et, ensuite, atteignent une plage d'acquisition d'images de l'appareil d'acquisition d'images, ou, alternativement, un ou plusieurs articles passent d'abord à travers la plage d'acquisition d'images de l'appareil d'acquisition d'images, puis sont entrés dans l'équipement d'inspection de sécurité pendant une période de temps ;
une unité de détermination de similarité (104) configurée pour déterminer une similarité entre les contours de l'image radiographique et de l'image d'apparence ; et
une unité de détermination d'appariement (106) configurée pour, lorsque la similarité entre les contours de l'image radiographique et de l'image d'apparence est supérieure ou égale à un seuil de similarité prédéfini, déterminer que l'image radiographique et l'image d'apparence sont des images d'un même article.

6. Appareil de la revendication 5, dans lequel l'unité de détermination d'appariement est en outre configurée pour, lorsque la similarité entre les contours de l'image radiographique et de l'image d'apparence est inférieure au seuil de similarité prédéfini, déterminer que l'image radiographique et l'image d'apparence ne sont pas des images du même article.

7. Appareil de la revendication 5, dans lequel l'unité d'extraction de contours est en outre configurée pour :
convertir l'image radiographique et l'image d'apparence en images à niveaux de gris ; et
binariser les images à niveaux de gris de l'image radiographique et de l'image d'apparence pour extraire les contours de l'image radiographique et de l'image d'apparence.

8. Appareil de la revendication 5, dans lequel l'unité de détermination de similarité est en outre configurée pour :
déterminer des moments invariants en géométrie des contours de l'image radiographique et de l'image d'apparence ; et
déterminer une mesure de différence entre les moments invariants en géométrie des contours de l'image radiographique et de l'image d'apparence, comme étant la similarité entre les contours de l'image radiographique et de l'image d'apparence.

9. Appareil d'appariement d'images, comprenant :
une mémoire stockant des instructions exécutables par ordinateur ;
un processeur, lors de l'exécution des instructions exécutables par ordinateur, pouvant fonctionner pour effectuer les étapes du procédé de la revendication 1.
